# EUROPÄISCHE PATENTSCHRIFT

(11) **EP 3 557 084 B1**
(45) Veröffentlichungstag und Bekanntmachung des Hinweises auf die Patenterteilung: **10.09.2025**
(21) Anmeldenummer: 18167538.0
(22) Anmeldetag: 16.04.2018
(51) Int. Cl.: F16B 2/18, E06B 3/964, F16B 7/04, F16B 21/02

(54) **VERBINDUNGSELEMENT ZUM VERBINDEN VON PROFILELEMENTEN**
CONNECTING ELEMENT FOR CONNECTING PROFILE ELEMENTS
ÉLÉMENT DE RACCORDEMENT PERMETTANT DE RACCORDER DES ÉLÉMENTS PROFILÉS

(43) Veröffentlichungstag der Anmeldung: 23.10.2019
(73) Patentinhaber: Schletter International B.V., 1101 Amsterdam (NL)
(72) Erfinder: Fluhrer, Dieter, 84437 Reichertsheim (DE)
(74) Vertreter: Thum, Bernhard

(56) Entgegenhaltungen:
- EP-A1- 3 339 661
- DE-A1- 10 315 045
- US-A1- 2007 257 159
- US-A1- 2014 182 662
- US-A1- 2015 136 571

## Beschreibung

Die vorliegende Erfindung betrifft ein Verbindungselement zum Verbinden von wenigstens zwei Profilelementen. Ferner betrifft die vorliegende Erfindung eine Baugruppe aus einem Profilelement und einem solchen Verbindungselement.

Aus dem Stand der Technik sind derartige Verbindungselemente bekannt und beispielsweise in dem Dokument DE 101 46 492 A1 offenbart. Das in diesem Dokument offenbarte Verbindungselement besteht aus zwei an gegenüberliegenden Enden eines Zwischenstückes angeordneten Knebelelementen. Die Knebelelemente sind zum Einsetzen in Aufnahmen von miteinander zu verbindenden Profilen ausgebildet. Die Verbindung der Profile durch das Verbindungselement erfolgt dadurch, dass die Knebelelemente zunächst in die Aufnahmen eingesetzt und verdreht werden. Zum Verdrehen des Verbindungselementes sind zwischen den Knebelelementen Ansatzflächen in Form eines Außensechskantes zum Ansetzen eines Schraubenschlüssels oder dergleichen vorgesehen. Die drehfeste Verbindung der beiden Profile erfolgt dadurch, dass sich die Knebelelemente beim Verdrehen mit ihren Schmalseiten unter Bildung einer Überdrehsicherung an den seitlichen Begrenzungswänden der nutförmigen Aufnahmen der Profile klemmend anlegen. Ein ähnliches Verbindungselement ist in Dokument US 2015/136571 A1 beschrieben.

Es ist eine Aufgabe der vorliegenden Erfindung ein derartiges Verbindungselement insbesondere im Hinblick auf seine Klemmwirkung weiter zu verbessern. Ferner ist es eine weitere Aufgabe der vorliegenden Erfindung ein Verbindungselement bereitzustellen, das eine Baugruppe mit einem Profilelement bilden und als Baugruppe, d.h. zusammen mit dem Profilelement, mit einem weiteren Profilelement verbunden zu werden.

Diese Aufgaben werden erfindungsgemäß mit einem Verbindungselement mit den im Patentanspruch 1 angegebenen Merkmalen gelöst.

Weitere Ausführungsformen sind in den abhängigen Ansprüchen angegeben.

Das Verbindungselement zum Verbinden von wenigstens zwei Profilelementen ist zur Erzeugung einer Klemmkraft um eine Drehachse verdrehbar. Das Verbindungselement weist wenigstens einen ersten Verbindungsabschnitt und wenigstens einen zweiten Verbindungsabschnitt auf, die jeweils zur Aufnahme in einem der Profilelemente ausgebildet sind. Der erste Verbindungsabschnitt weist wenigstens eine Klemmfläche auf, wobei die wenigstens eine erste Klemmfläche mit einer vorbestimmten Klemmkontur ausgebildet ist. Der zweite Verbindungsabschnitt weist wenigstens eine zweite Klemmfläche auf, wobei die erste Klemmfläche dem zweiten Verbindungsabschnitt und die zweite Klemmfläche dem ersten Verbindungsabschnitt zugewandt ist. Der erste Verbindungsabschnitt und der zweite Verbindungsabschnitt sind derart ausgebildet, dass die über das Verbindungselement verbundenen Profilelemente schräg zueinander oder über Kreuz verlaufen.

Die beiden Verbindungsabschnitte des Verbindungselements können jeweils in eine Aufnahme eines Profilelements eingesetzt werden. Die Klemmflächen der Verbindungsabschnitte können derart zusammenwirken, das durch die Verdrehung des Verbindungselements um die Drehachse mit den Stegen oder Vorsprüngen, die die Öffnung der Aufnahme in dem Profilelement festlegen, eine Klemmkraft erzeugt wird. Mit dem Verbindungselement können zwei Profilelemente verbunden werden, die nach der Verbindung mittels des Verbindungselements schräg zueinander, quer zueinander oder über Kreuz verlaufen. Zur Erzeugung einer Klemmkraft kann die zumindest abschnittsweise schräg zu der Drehachse verlaufende erste Klemmfläche an einem der Vorsprünge des Profilelements angreifen, die die schlitzförmige, sich in Richtung der Längsachse erstreckende Öffnung festlegen. Der erste Verbindungsabschnitt und der zweite Verbindungsabschnitt können um einen vorbestimmten Winkel um die Drehachse zueinander versetzt an dem Verbindungselement ausgebildet sein. Dieser Winkel kann beispielsweise 90° betragen. Der Winkel, um den der erste Verbindungsabschnitt und der zweite Verbindungsabschnitt um die Drehachse zueinander versetzt sind, kann von dem Winkel abhängen, den die beiden Profilelemente bzw. die Längsachsen der Profilelemente im über das wenigstens eine Verbindungselement verbundenen Zustand zueinander aufweisen sollen. Der erste Verbindungsabschnitt und der zweite Verbindungsabschnitt können auch in Drehachsenrichtung betrachtet in der Flucht liegen.

Der zweite Verbindungsabschnitt ist derart ausgebildet, dass der zweite Verbindungsabschnitt in einer Aufnahme von einem der beiden Profilelemente über eine Presspassung aufnehmbar ist. Ferner ist der zweite Verbindungsabschnitt derart ausgebildet, dass er ausgehend von einer Stirnfläche bzw. Stirnseite eines Profilelements in die Aufnahme einpressbar bzw. einsteckbar ist. Das Verbindungselement wird über den zweiten Verbindungsabschnitt in eine vordefinierte Position an dem Profilelement verlagert. Das Verbindungselement kann beispielsweise mittig in der Aufnahme des Profilelements positioniert werden. Das wenigstens eine Verbindungselement und das Profilelement können eine fest miteinander verbundene Baugruppe bilden. Das wenigstens eine Verbindungselement kann drehfest mit dem Profilelement verbunden sein. Das Verbindungselement kann mit dem Profilelement dauerhaft fest verbunden werden.

Die Baugruppe aus dem Profilelement und dem eingepressten Verbindungselement kann über das Verbindungselement mit einem weiteren Profilelement verbunden werden. Dazu wird der erste Verbindungsabschnitt des Profilelements in die Aufnahme des Profilelements eingesetzt, mit dem eine Verbindung hergestellt werden soll. Im Anschluss daran kann die Baugruppe relativ zu diesem Profilelement um die Drehachse des Verbindungselements verdreht werden. Der Betrag der Relativverdrehung kann beispielsweise 90° betragen. Die Verdrehung des Verbindungselements kann durch das Profilelement initiiert werden, mit dem das Verbindungselement eine Baugruppe bildet. In diesem Fall wird kein zusätzliches Werkzeug benötigt, um eine Verbindung zwischen zwei Profilelementen über das Verbindungselement herzustellen. Es reicht aus den ersten Verbindungsabschnitt des Verbindungselements in die Aufnahme des Profilelements einzusetzen und die Baugruppe relativ zu diesem Profilelement zu verdrehen.

An dem zweiten Verbindungsabschnitt kann wenigstens ein Vorsprung ausgebildet sein, mit dem sich der zweite Verbindungsabschnitt an der Aufnahme eines Profilelements abstützt. An dem zweiten Verbindungsabschnitt können auch mehrere Vorsprünge ausgebildet sein. Über die Vorsprünge kann sich der zweite Verbindungsabschnitt an den Wänden der nutähnlichen Aufnahme des Profilelements abstützen. Beispielsweise können ein Vorsprung an der Oberseite und jeweils ein Vorsprung an den Seitenflächen des zweiten Verbindungsabschnitts ausgebildet sein. Jeder dieser Vorsprünge kann sich an einer Wand der Aufnahme abstützen. Beispielsweise kann sich der Vorsprung an der Oberseite des zweiten Verbindungsabschnitts an der Bodenfläche der Aufnahme abstützen. Die Vorsprünge an den Seitenflächen des zweiten Verbindungsabschnitts können sich an den Seitenflächen der Aufnahme abstützen.

Der wenigstens eine Vorsprung kann gekrümmt sein. Das Verbindungselement kann in Richtung der Längsachse des Profilelements eingesteckt werden. Der wenigstens eine Vorsprung an dem zweiten Verbindungsabschnitt kann in Richtung der Längsachse des Profilelements gekrümmt sein. Dadurch kann zunächst das Einstecken bzw. Zentrieren des zweiten Verbindungsabschnitts an dem Profilelement vereinfacht werden. Je weiter der zweite Verbindungsabschnitt in die Aufnahme eingeschoben und je weiter sich der Vorsprung nach außen krümmt, umso größer werden die Kräfte, mit denen sich der Verbindungsabschnitt in der Aufnahme des Profilelements verspannt. Beispielsweise kann der Vorsprung an der Oberseite des zweiten Verbindungsabschnitts gekrümmt sein. Die Krümmung erstreckt sich entlang der Einsteckrichtung des Verbindungselements bzw. des zweiten Verbindungsabschnitts in die Aufnahme des Profilelements. Wie bereits erwähnt, wird der zweite Verbindungsabschnitt ausgehend von einer Stirnfläche des Profilelements in die Aufnahme des Profilelements eingesteckt bzw. eingepresst.

Die wenigstens eine erste Klemmfläche und die wenigstens eine zweite Klemmfläche können zwischen sich wenigstens einen Klemmkanal zum Klemmen eines Abschnitts eines der Profilelemente bilden.

Der Verbindungsabschnitt kann wenigstens eine Abstützfläche aufweisen, über die sich der zweite Verbindungsabschnitt an der Aufnahme eines Profilelements abstützen kann. Die wenigstens eine Abstützfläche kann sich insbesondere an die Stege oder Vorsprünge anlegen, die die Öffnung der Aufnahme festlegen. Die zweite Klemmfläche des zweiten Verbindungsabschnitts kann sich im Wesentlichen parallel zu der wenigstens einen Abstützfläche erstrecken. Zwischen der zweiten Klemmfläche und der wenigstens einen Abstützfläche kann eine Stufe bzw. ein Absatz vorgesehen sein, der von zwei Führungsflächen gebildet wird. Die Führungsflächen können sich abgewinkelt oder im Wesentlichen senkrecht zu der zweiten Klemmfläche erstrecken. Ferner können sich die Führungsflächen mit einem Winkel oder im Wesentlichen parallel zueinander erstrecken. Der Abstand zwischen den Führungsflächen kann auf den Abstand zwischen den beiden Vorsprüngen abgestimmt sein, die die schlitzförmige Öffnung der Aufnahme des Profilelements festlegen. Die Stege können sich an die Führungsflächen anlegen, die die wenigstens eine Abstützfläche mit der wenigstens einen zweiten Klemmfläche verbinden. Durch die Führungsflächen kann der zweite Verbindungsabschnitt in der Aufnahme während des Einsteckens oder Einpressens geführt werden. Ferner kann unter anderem über die Führungsflächen verhindert werden, dass sich der zweite Verbindungsabschnitt in der Aufnahme des Profilelements relativ zu dem Profilelement verdrehen kann. Der zweite Verbindungsabschnitt kann über den Abstand zwischen den Führungsflächen und/oder seine Dimensionierung in seiner vorbestimmten Position und Stellung in der Aufnahme des Profilelements gehalten werden. Der zweite Verbindungsabschnitt über die Führungsflächen und/oder seine Dimensionierung selbst dann in seiner vorbestimmten Position und Stellung in der Aufnahme des Profilelements gehalten werden, wenn das Verbindungselement mit einem Profilelement eine Baugruppe bildet, und diese Baugruppe zur Herstellung einer Verbindung mit einem weiteren Profilelement relativ zu diesem Profilelement verdreht wird.

Zwischen dem ersten Verbindungsabschnitt und dem zweiten Verbindungsabschnitt kann wenigstens ein Anlageabschnitt angeordnet sein. Der wenigstens eine Anlageabschnitt kann wenigstens eine dritte Klemmfläche und wenigstens eine vierte Klemmfläche aufweisen. Die dritte Klemmfläche kann der ersten Klemmfläche des ersten Verbindungsabschnitts zugewandt sein. Die vierte Klemmfläche kann der zweiten Klemmfläche des zweiten Verbindungsabschnitts zugewandt sein. Die wenigstens eine erste Klemmfläche und die wenigstens eine dritte Klemmfläche können wenigstens einen Klemmkanal zwischen sich festlegen. Ferner können die wenigstens eine zweite Klemmfläche und die vierte Klemmfläche wenigstens einen weiteren Klemmkanal zwischen sich festlegen. Der erste Verbindungsabschnitt und der zweite Verbindungsabschnitt können beispielsweise um 90° um die Drehachse zueinander versetzt an dem Verbindungselement ausgebildet sein. Insbesondere können die wenigstens eine erste Klemmfläche und die wenigstens eine zweite Klemmfläche an den Verbindungsabschnitten um 90° um die Drehachse zueinander versetzt ausgebildet sein. Der erste Verbindungsabschnitt und der zweite Verbindungsabschnitt können auch in Drehachsenrichtung betrachtet in der Flucht liegen. Die wenigstens eine erste Klemmfläche und die wenigstens eine zweite Klemmfläche können in Drehachsenrichtung betrachtet ebenfalls in einer Flucht liegen.

Das Verbindungselement kann Ansatzflächen aufweisen, an denen ein Werkzeug zum Verdrehen des Verbindungselements angesetzt werden kann. Der Anlageabschnitt kann plattenförmig ausgebildet sein. Der Anlageabschnitt kann eine quadratische, rechteckförmige oder polygonale Grundform aufweisen. Die dritte Klemmfläche und die vierte Klemmfläche können an entgegengesetzten Seiten des wenigstens einen Anlageabschnitts vorgesehen sein. Die erste Klemmfläche des ersten Verbindungsabschnitts und die zweite Klemmfläche des zweiten Verbindungsabschnitts können einander und durch die Anordnung des Anlageabschnitts zwischen den Klemmflächen des ersten und des zweiten Verbindungsabschnitts auch den dritten und vierten Klemmflächen zugewandt sein.

Das Verbindungselement kann mit seinem ersten Verbindungsabschnitt in eine Aufnahme eines Profilelements eingesteckt werden. Dann wird ein zweites Profilelement mit seiner Aufnahme auf den zweiten Verbindungsabschnitt des Verbindungselements aufgesetzt. Im Anschluss daran kann das Verbindungselement beispielsweise um 90° verdreht werden, wodurch über die Klemmkontur an den ersten und zweiten Klemmflächen eine Klemmwirkung zwischen der ersten Klemmfläche, der dritten Klemmfläche und einem der Vorsprünge an der Aufnahme des ersten Profilelements und zwischen der zweiten Klemmfläche, der vierten Klemmfläche und einem der Vorsprünge an der Aufnahme des zweiten Profilelements erzeugt wird. Anders ausgedrückt werden die Profilelemente und das Verbindungselement über die Verdrehung des Verbindungselements miteinander verklemmt und auf diese Weise miteinander verbunden. Die Profilelemente erstrecken sich dann schräg zueinander oder kreuzen sich. Die Längsachsen der Profilelemente können sich quer oder schräg zueinander erstrecken, können sich aber auch kreuzen.

Die zweite Klemmfläche des zweiten Verbindungsabschnitts kann mit einer vorbestimmten Klemmkontur ausgebildet sein. Die Klemmkontur der zweiten Klemmfläche des zweiten Verbindungsabschnitts kann der Klemmkontur der ersten Klemmfläche des ersten Verbindungsabschnitts entsprechen. Die beiden Klemmkonturen der ersten Klemmfläche und der zweite Klemmfläche können sich jedoch auch voneinander unterscheiden

Die Klemmkontur der wenigstens einen ersten Klemmfläche des ersten Verbindungsabschnitts und/oder die Klemmkontur der wenigstens einen zweiten Klemmfläche des zweiten Verbindungsabschnitt können eine Krümmung oder Wölbung aufweisen. Die ersten und zweiten Klemmflächen können aufeinander zu gewölbt sein. Die erste Klemmfläche kann dementsprechend in Richtung der zweiten Klemmfläche und die zweite Klemmfläche in Richtung der ersten Klemmfläche gewölbt sein. Ferner können die ersten und zweiten Klemmflächen auch in Richtung der dritten und vierten Klemmflächen an dem wenigstens einen Anlageabschnitt gewölbt sein. Aufgrund der Wölbung der Klemmflächen kann durch die Verdrehung des Verbindungselements eine Klemmkraft zwischen dem Verbindungselement und dem jeweiligen Profilelement erzeugt werden.

Die Klemmkontur der ersten Klemmfläche und/oder die Klemmkontur der zweiten Klemmfläche können jeweils mit einer Hinterschneidung ausgebildet sein. Durch die Hinterschneidung kann eine relativ große Klemmkraft erzeugt werden. Durch die Hinterschneidung kann damit das Lösen des Verbindungselements von einem der Profilelemente verhindert werden.

Das Verbindungselement kann aus gussfähigen oder spritzfähigen Materialen hergestellt werden. Das wenigstens eine Verbindungselement kann beispielsweise aus Aluminium, Zink oder faserverstärkten Kunststoffen wie PE, PP, PC, POM, PET, PEEK oder PA hergestellt sein. Beispielsweise kann das wenigstens eine Verbindungselement durch ein Aluminium-Druckgussverfahren oder ein Zink-Druckgussverfahren hergestellt sein. Es ist auch denkbar, dass das Verbindungselement aus mehreren unterschiedlichen Materialen hergestellt ist.

Das Verbindungselement zum Verbinden von wenigstens zwei Profilelementen kann derart ausgebildet sein, dass das Verbindungselement zur Erzeugung einer Klemmkraft um eine Drehachse verdrehbar ist, wobei das Verbindungselement wenigstens einen ersten Verbindungsabschnitt und wenigstens einen zweiten Verbindungsabschnitt aufweist, die jeweils zur Aufnahme in einem der Profilelemente ausgebildet sind, wobei der erste Verbindungsabschnitt wenigstens eine erste Klemmfläche aufweist, wobei die wenigstens eine erste Klemmfläche mit einer vorbestimmten Klemmkontur ausgebildet ist, wobei der zweite Verbindungsabschnitt wenigstens eine zweite Klemmfläche aufweist, wobei die erste Klemmfläche dem zweiten Verbindungsabschnitt und die zweite Klemmfläche dem ersten Verbindungsabschnitt zugewandt sind.

Die vorliegende Erfindung betrifft ferner eine Baugruppe mit wenigstens einem Profilelement und wenigstens einem Verbindungselement der voranstehend beschriebenen Art. Das wenigstens eine Verbindungselement ist mit seinem zweiten Verbindungsabschnitt in der Aufnahme des wenigstens einen Profilelements über eine Presspassung aufgenommen. Mit dem ersten Verbindungsabschnitt kann das wenigstens eine Verbindungselement der Baugruppe in eine Aufnahme eines weiteren Profilelements eingesetzt werden. Im Anschluss an das Einsetzen in die Aufnahme kann die Baugruppe aus Profilelement und Verbindungselement relativ zu dem weiteren Profilelement verdreht werden, sodass der erste Verbindungsabschnitt die beiden Profilelemente gegeneinander verklemmen kann.

Im Folgenden werden beispielhafte Ausführungsformen mit Bezug auf die beigefügten Figuren beschrieben. Es stellen dar:
- Figuren 1 bis 5: verschiedene Ansichten eines Verbindungselements gemäß einer ersten Ausführungsform;
- Figur 6: eine perspektivische Ansicht eines Profilelements und eines Verbindungselements gemäß der ersten Ausführungsform vor der Verbindung zu einer Baugruppe;
- Figur 7: eine perspektivische Ansicht der von einem Profilelement und dem Verbindungselement gemäß der ersten Ausführungsform gebildeten Baugruppe;
- Figur 8: eine perspektivische Ansicht der Baugruppe gemäß Figur 7, wobei der erste Verbindungsabschnitt des Verbindungselements der Baugruppe in eine Aufnahme eines weiteren Profilelements eingesetzt worden ist;
- Figur 9: eine perspektivische Ansicht der Baugruppe und des Profilelements gemäß Figur 8, wobei die Baugruppe um 45° relativ zu dem Profilelement verdreht wurde;
- Figur 10: eine perspektivische Ansicht der Baugruppe und des Profilelements im verbundenen Zustand, d. h. die Baugruppe wurde um ca. 90° relativ zu dem Profilelement verdreht;
- Figuren 11 bis 15: verschiedene Ansichten eines Verbindungselements gemäß einer zweiten Ausführungsform;
- Figur 16: eine Schnittansicht entlang der Schnittlinie XVI-XVI in Figur 14;
- Figur 17: eine vergrößerte Ansicht des Details XVII-XVII in Figur 15;
- Figur 18: eine Schnittansicht entlang der Schnittlinie XVIII-XVIII in Figur 14; und
- Figur 19: eine vergrößerte Ansicht des Details XIX in Figur 14; und
- Figuren 20 und 21: Ansichten der Montage des Verbindungselements gemäß der zweiten Ausführungsform.

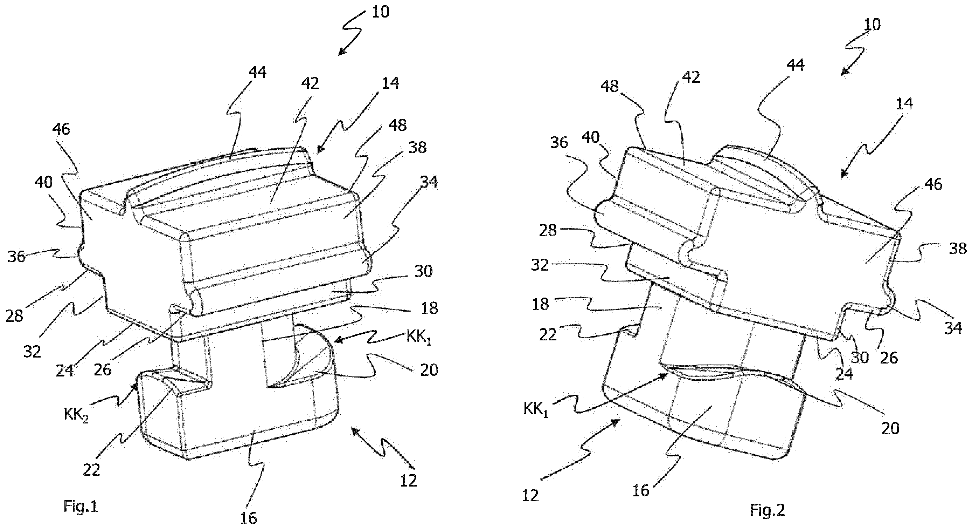

Die Figuren 1 und 2 zeigen perspektivische Ansichten eines Verbindungselements 10 gemäß einer ersten Ausführungsform.

Das Verbindungselement 10 weist einen ersten Verbindungsabschnitt 12 und einen zweiten Verbindungsabschnitt 14 auf. Der erste Verbindungsabschnitt 12 weist einen Kopfabschnitt 16 und einen säulenförmigen Abschnitt 18 auf, der den Kopfabschnitt 16 mit dem zweiten Verbindungsabschnitt 14 verbindet. An dem Kopfabschnitt 16 sind die beiden ersten Klemmflächen 20 und 22 ausgebildet, die in Richtung des zweiten Verbindungsabschnitts 14 zeigen. Die Klemmflächen 20 und 22 weisen eine vorbestimmte Klemmkontur auf. Wie in Figur 1 erkennbar ist, haben die ersten Klemmflächen 20 und 22 eine Klemmkontur, die eine Krümmung bzw. Wölbung aufweist. Andeutungsweise lässt sich in Figur 1 auch eine Hinterschneidung erkennen, mit dem die Klemmkonturen der Klemmflächen 20 und 22 versehen sind. In diesem Zusammenhang sind unter dem Begriff "Klemmflächen" Flächen zu verstehen, die mit wenigstens einem der über das Verbindungselement 10 zu verbindenden Profilelemente (nicht gezeigt) in Kontakt kommen bzw. sich an eines der Profilelemente anlegen.

Der zweite Verbindungsabschnitt 14 hat eine zweite Klemmfläche 24, die in Richtung der ersten Klemmflächen 20, 22 weist. An die zweite Klemmfläche 24 schließt sich eine Stufe oder ein Absatz an, der den Übergang in Abstützflächen 26 und 28 bildet. Über die Abstandsflächen 26, 28 kann sich der zweite Verbindungsabschnitt 14 an der Aufnahme (nicht gezeigt) eines Profilelements (nicht gezeigt) abstützen. Die Abstandsflächen 26, 28 werden über Führungsflächen 30 und 32 mit der zweiten Klemmfläche 24 verbunden. Die Führungsflächen 32 und 34 erstrecken sich im Wesentlichen senkrecht zu den Abstützflächen 26, 28 und der zweiten Klemmfläche 24. Die Führungsflächen 30, 32, können die Einführbewegung des zweiten Verbindungsabschnitts 14 in eine nicht gezeigte Aufnahme eines Profilelements (nicht gezeigt führen und ein Verdrehen des zweiten Verbindungsabschnitts 14 relativ zu dem Profilelement (nicht gezeigt) verhindern. An die Abstützflächen 26 und 28 schließen sich zwei Vorsprünge 34 und 36 an, die an den Seitenflächen 38 und 40 des zweiten Verbindungsabschnitts 14 ausgebildet sind. An die Seitenflächen 38 und 40 schließt sich eine Dachfläche 42 des zweiten Verbindungsabschnitts 14 an, die die Seitenflächen 38 und 40 miteinander verbindet. Die Dachfläche 42 hat einen Vorsprung 44. Der Vorsprung 44 ist mit einer Krümmung versehen, wie in den Figuren 1 und 2 erkennbar ist. Der zweite Verbindungsabschnitt 14 hat ferner eine Vorderfläche 46 und eine Rückfläche 48, die sich zwischen der zweiten Klemmfläche 24, den Führungsflächen 28, 30, den Abstützflächen 26, 28, den Seitenflächen, 38, 40 und der Dachfläche 42 erstrecken.

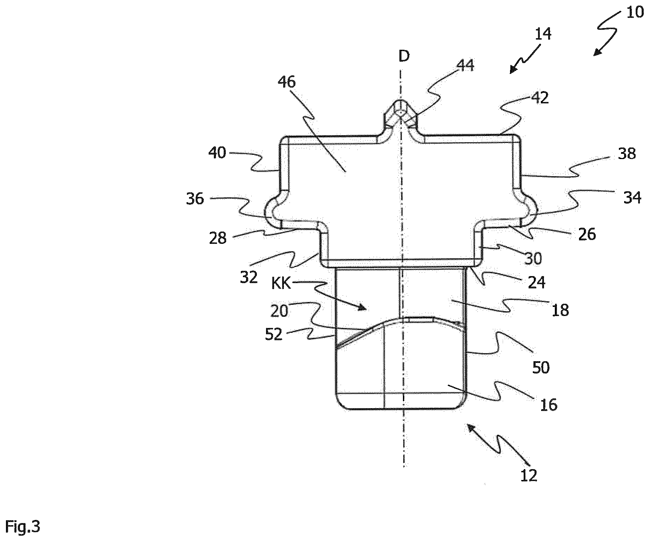

Figur 3 zeigt eine Vorderansicht des Verbindungselements 10. In Figur 3 sind der erste Verbindungsabschnitt 12 und der zweite Verbindungsabschnitt 14 erkennbar. Der erste Verbindungsabschnitt 12 weist den Kopfabschnitt 16 und den säulenförmigen Abschnitt 18 auf, der den ersten Verbindungsabschnitt 12 mit dem zweiten Verbindungsabschnitt 14 verbindet. Insbesondere ist der Abschnitt 18 des ersten Verbindungsabschnitts 12 mit der zweiten Klemmfläche 24 des zweiten Verbindungsabschnitts 14 verbunden. Der Abschnitt 18 des ersten Verbindungsabschnitts 12 ist zentral an der zweiten Klemmfläche 24 angeordnet. Die zweite Klemmfläche 24 umläuft das Ende des Abschnitts 18. An dem Kopfabschnitt 16 ist die erste Klemmfläche 20 ausgebildet, die in Richtung der zweiten Klemmfläche 24 an dem zweiten Verbindungsabschnitt 14 weist. Die Klemmfläche 20 weist eine vorbestimmte Klemmkontur KK auf. Wie in Figur 3 erkennbar ist, ist die Klemmkontur KK der ersten Klemmfläche 20 gekrümmt ausgebildet. Die Klemmfläche 20 erstreckt sich zwischen den Seitenflächen 50 und 52 des ersten Verbindungsabschnitts. Ausgehend von der in Figur 3 linken Seitenfläche 52, verläuft die Klemmfläche 20 gekrümmt in Richtung der Drehachse D, wobei die Krümmung im Bereich der Drehachse D ihren Scheitelpunkt aufweist. Nach dem Scheitelpunkt, der sich in der Ansicht gemäß Figur 3 im Bereich der Drehachse D befindet, fällt die Klemmfläche 20 gekrümmt leicht in Richtung der in Figur 3 rechten Seitenfläche 50 des ersten Verbindungsabschnitts 12 ab. Der Ausgangspunkt der Klemmfläche 20 an der Seitenfläche 52 liegt in Richtung der Drehachse D unterhalb des Endpunkts der Klemmfläche 20 an der Seitenfläche 50. Mit der Klemmkontur KK der Klemmfläche 20 kann ein Profilelement (nicht gezeigt) durch eine Verdrehung um die Drehachse D des Verbindungselements 10 zwischen der ersten Klemmfläche 20 und der der ersten Klemmfläche 20 gegenüberliegenden zweiten Klemmfläche 24 geklemmt werden. Die zweite Klemmfläche 24 gemäß dieser Ausführungsform erstreckt sich im Wesentlichen senkrecht zur Drehachse D.

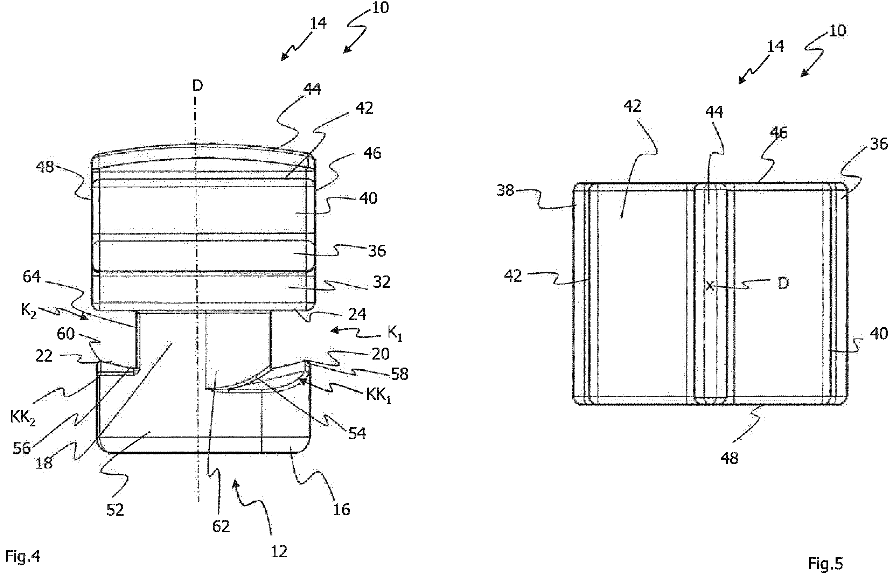

Figur 4 zeigt eine Seitenansicht des Verbindungselements 10. Der Kopfabschnitt 16 des ersten Verbindungsabschnitts 12 weist die beiden Klemmflächen 20 und 22 auf. Die Klemmflächen 20 und 22 haben jeweils eine vorbestimmte Klemmkontur KK₁ und KK₂. Die Klemmkonturen KK₁ und KK₂ sind gekrümmt ausgebildet und weisen eine Hinterschneidung auf. Die Hinterschneidung der Klemmkonturen KK₁ und KK₂ wird dadurch erkennbar, dass sich die Kanten 54 und 56, die sich entlang des Abschnitts 18 erstrecken, zumindest abschnittsweise in Richtung der Drehachse D unterhalb der Außenkanten 58 und 60 der Klemmflächen 20 und 22 befinden. Je weiter sich die Klemmflächen 20 und 22 von der Drehachse D weg erstrecken, umso größer wird die Erstreckung des Kopfabschnitts 16 in Richtung der Drehachse.

Der Vorsprung 44 ist gekrümmt ausgebildet. Die Krümmung des Vorsprungs 44 erstreckt sich in einer Richtung quer zur Drehachse D. Im Bereich der Drehachse D liegt der Scheitelpunkt der Krümmung des Vorsprungs 44.

Die erste Klemmfläche 20 und die Klemmfläche 24 legen zwischen sich einen ersten Klemmkanal K₁ fest. Die erste Klemmfläche 22 und die zweite Klemmfläche 24 legen zwischen sich einen zweiten Klemmkanal K₂ fest. Die Klemmflächen 20 und 22 liegen der Klemmfläche 24 gegenüber. In einer Richtung quer zur Drehachse D werden die Klemmkanäle K₁ und K₂ über die Wandflächen 62 und 64 des Abschnitts 18 des ersten Verbindungsabschnitts 12 begrenzt. Durch die Hinterschneidung und durch die Krümmung der Klemmflächen 20 und 22 in Richtung der zweiten Klemmfläche 24 verändert sich der Querschnitt der Klemmkanäle K₁ und K₂ in einer Richtung um die Drehachse D. Durch diesen Querschnitt der Klemmkanäle K₁ und K₂ vergrößert sich die Klemmkraft, je weiter das Verbindungselement 10 relativ zu dem mit dem ersten Verbindungsabschnitt 12 verbindbaren Profilelement (nicht gezeigt) verdreht wird. Beispielsweise können die Klemmkonturen KK₁ und KK₂ bzw. der daraus resultierende Querschnitt der Klemmkanäle K₁ und K₂ derart ausgebildet sein, dass die Klemmkraft am größten ist, wenn das Verbindungselement 10 um ca. 90° um die Drehachse D relativ zu dem Profilelement (nicht gezeigt) verdreht wurde, das mit dem ersten Verbindungsabschnitt 12 geklemmt werden soll.

Figur 5 zeigt eine Draufsicht des Verbindungselements 10. In Figur 5 ist die Dachfläche 42 des Verbindungselements 10 gezeigt. Die Dachfläche 42 weist den Vorsprung 44 auf. An den Seitenflächen 40 und 42 des zweiten Verbindungsabschnitts 14 sind die Vorsprünge 36 und 38 ausgebildet. Die Verbindungsabschnitte 12 und 14 können in Richtung der Drehachse D betrachtet in einer Flucht liegen (siehe auch Figuren 3 und 4).

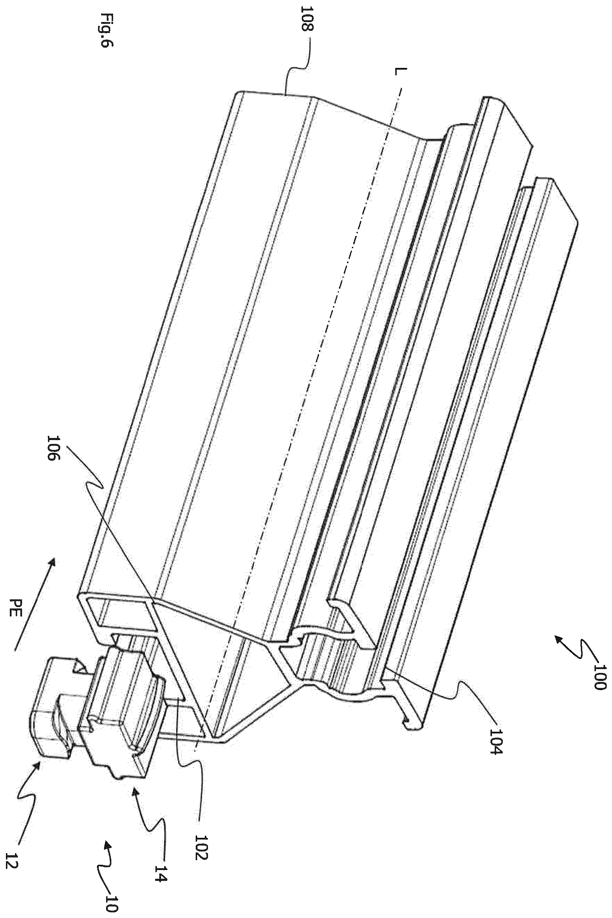

Figur 6 zeigt eine perspektivische Ansicht eines Profilelements 100 und des Verbindungselements 10 gemäß der ersten Ausführungsform. Das Profilelement 100 und das Verbindungselement 10 können miteinander verbunden werden, um eine Baugruppe zu bilden. Zur Bildung einer Baugruppe wird das Verbindungselement 10 mit seinem zweiten Verbindungsabschnitt 14 in eine Aufnahme 102 des Profilelements 100 eingesetzt. Das Profilelement 100 weist neben der Aufnahme 102 eine weitere Aufnahme 104 an seiner Oberseite auf. Das Verbindungselement 10 wird von der Stirnseite 106 aus in die Aufnahme 102 eingesteckt bzw. eingepresst. Das Verbindungselement 10 wird mit seinem zweiten Verbindungsabschnitt 14 in Richtung der Längsachse L des Profilelements 100 eingesteckt. Die Einsteckrichtung ist nochmals durch den Pfeil PE in Figur 6 dargestellt. Es ist jedoch auch möglich, das Verbindungselement 10 ausgehend von der Stirnseite 108 in die Aufnahme 102 des Profilelements 100 einzuführen.

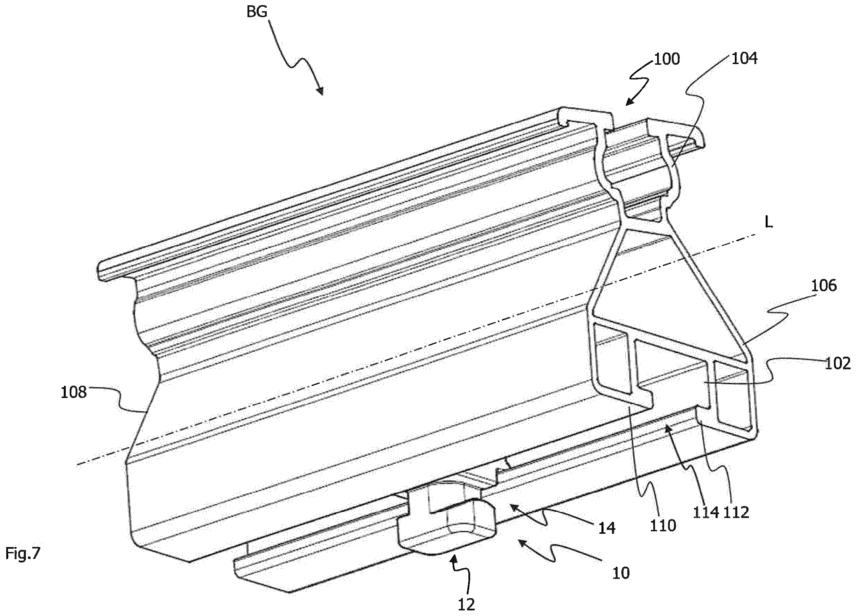

In Figur 7 wurde das Verbindungselement 10 in die Aufnahme 102 des Profilelements 100 eingepresst. Das Verbindungselement 10 ist in Richtung der Längsachse L im Wesentlichen mittig in der Aufnahme 102 des Profilelements 100 positioniert. Die Aufnahme 102 ist im Querschnitt rechteckförmig ausgebildet und weist zwei Stege bzw. Vorsprünge 110 und 112 auf, die eine sich in Richtung der Längsachse L erstreckende, schlitzförmige Öffnung 114 festlegen. Der zweite Verbindungsabschnitt 14 des Verbindungselements 10 ist über eine Presspassung in der Aufnahme 102 des Profilelements 100 aufgenommen. Das Profilelement 100 und das Verbindungselement 10 bilden eine Baugruppe BG. Die Baugruppe BG kann über den Verbindungsabschnitt 12 mit einem weiteren Profilelement (nicht gezeigt) verbunden werden. Das Profilelement 100 kann beispielsweise ein Auflager für die Solarmodule sein.

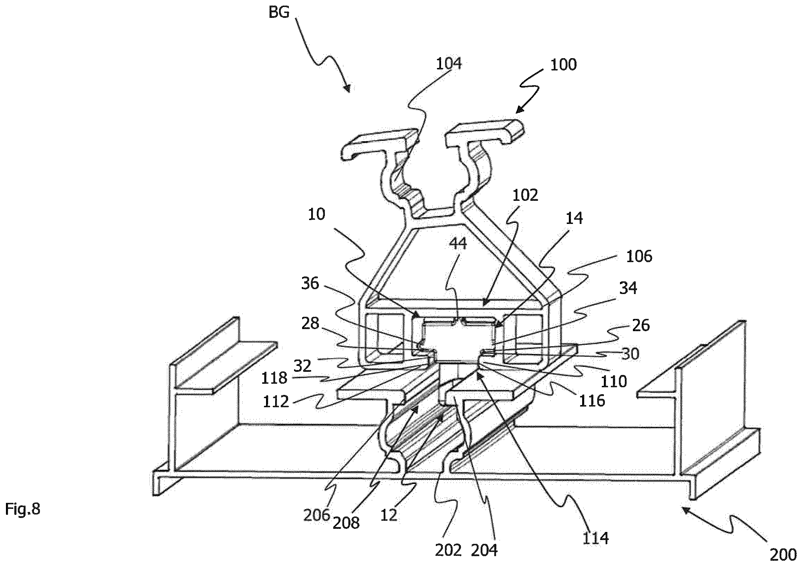

Figur 8 zeigt eine perspektivische Ansicht der Baugruppe BG im an einem weiteren Profilelement 200 eingesetzten aber noch nicht fest verbundenen Zustand. Das Profilelement 200 weist eine Aufnahme 202 auf, in die der erste Verbindungsabschnitt 12 des Verbindungselements 10 eingesetzt wurde. Das Profilelement 100 der Baugruppe BG liegt mit seiner Unterseite an der Oberseite der Aufnahme 202 des Profilelements 200 an. Die Aufnahme 202 des Profilelements 200 weist Stege oder Vorsprünge 204, 206 auf, die eine schlitzförmige Öffnung 208 begrenzen. Durch die Öffnung 208 wurde der zweite Verbindungsabschnitt 12 des Verbindungselements 10 in die Aufnahme 202 eingesetzt.

Der zweite Verbindungsabschnitt 14 des Verbindungselements 10 ist, wie im Zusammenhang mit Figur 7 bereits beschrieben wurde, in der Aufnahme 102 des Profilelements 100 über eine Presspassung aufgenommen. Der zweite Verbindungsabschnitt 14 stützt sich über die Vorsprünge 34, 36 und 44 an den Wandflächen der Aufnahme 102 ab. Die Abstützflächen 26 und 28 liegen an den Vorsprüngen 110 und 112 der Aufnahme 102 an. Die Führungsflächen 30, 32 liegen an den einander gegenüberliegenden Begrenzungsflächen 116, 118 der Vorsprünge 110, 112 an, die die Öffnung 114 begrenzen. Der Bereich des zweiten Verbindungsabschnitts 14 zwischen den Führungsflächen 30, 32 ist zwischen den Begrenzungsflächen 116, 118 an den Vorsprüngen 110, 112 aufgenommen.

In Figur 8 ist der erste Verbindungsabschnitt 12 in die Aufnahme 202 des Profilelements 200 eingesetzt, aber noch nicht mit dem Profilelement 200 fest verbunden. Das Einsetzen in die Aufnahme 202 kann von oben durch die Öffnung 208 der Aufnahme 202 erfolgen. Das Verbindungselement 10 und damit die Baugruppe 100 ist noch nicht fest mit dem Profilelement 200 verbunden, da die Baugruppe BG noch nicht relativ zu dem Profilelement 200 verdreht wurde. In diesem Zustand erstrecken sich die Profilelemente 100 und 200 noch "parallel" zueinander.

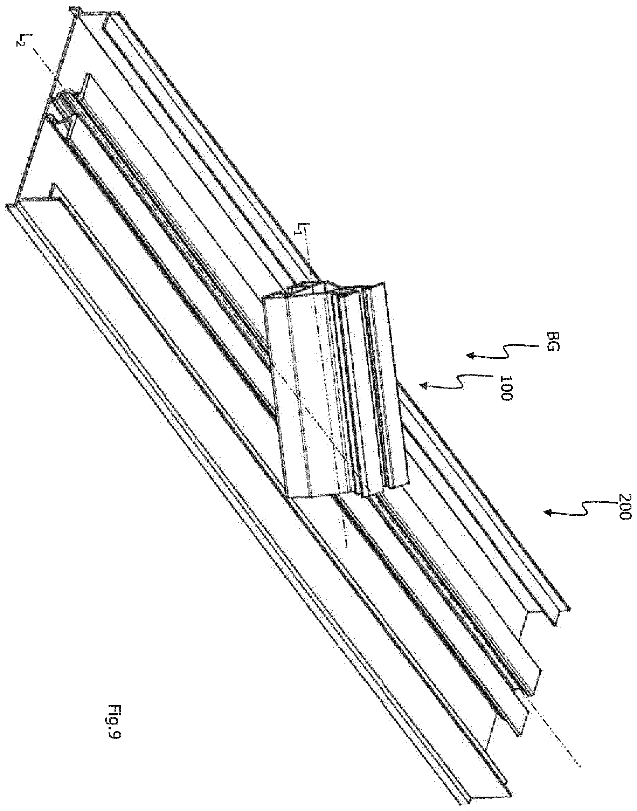

Figur 9 zeigt eine perspektivische Ansicht, in der die Baugruppe BG relativ zu dem Profilelement 200 verdreht wurde. In Figur 9 ist nur das Profilelement 100 der Baugruppe BG erkennbar. Das Profilelement 100 erstreckt sich schräg zu dem Profilelement 100. Die Längsachse L₁ des Profilelements 100 erstreckt sich schräg zu der Längsachse L₂ des Profilelements 200. Das Profilelement 100 wurde in Figur 9 um ca. 45° relativ zu dem Profilelement 200 verdreht.

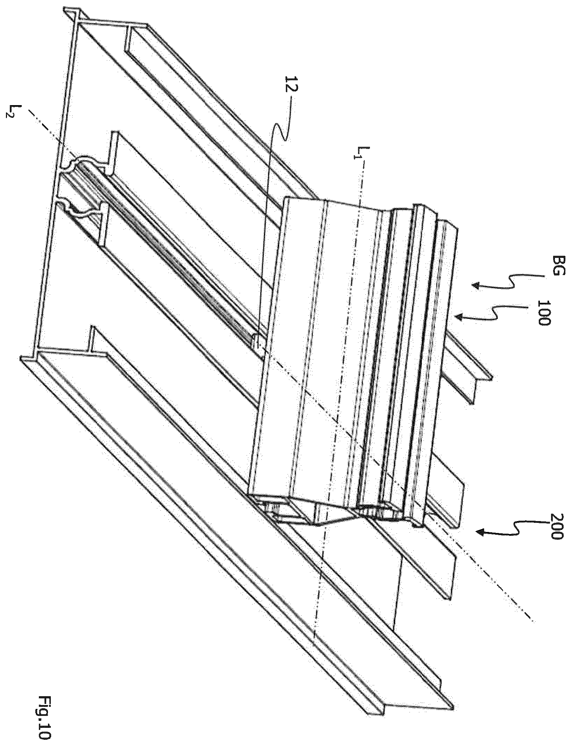

In Figur 10 ist die Baugruppe BG im an dem Profilelement 208 befestigten Zustand gezeigt. Ausgehend von der in Figur 9 gezeigten Zwischenstellung der Baugruppe BG, wurde die Baugruppe BG, d.h. das Profilelement 100 und das Verbindungselement 10, weiter in die in Figur 10 gezeigte Endstellung verdreht. Die Baugruppe wurde um 90° relativ zu dem Profilelement 200 verdreht. In diesem Zustand liegen die Klemmflächen 20, 22 und 24 (siehe Figuren 1 bis 4) des Verbindungselements 10 an den Vorsprüngen 204 und 206 der Aufnahme 202 des Profilelements 200 an. Die Klemmkonturen KK₁ und KK₂ (siehe Figur 4) der Klemmflächen 20 und 22 erzeugen zusammen mit der Klemmfläche 24 eine Klemmwirkung, um die Baugruppe BG an dem Profilelement 200 zu halten. In diesem Zustand verläuft das Profilelement 100 der Baugruppe BG quer zu dem Profilelement 200. Die Längsachse L₁ des Profilelements 100 und die Längsachse L₂ des Profilelements 200 verlaufen über Kreuz.

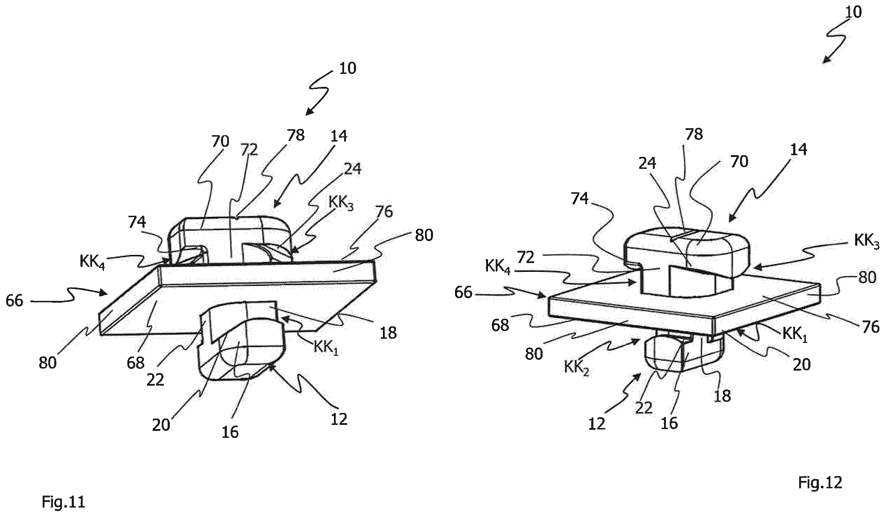

Im Folgenden wird mit Bezug auf die Figuren 11 bis 21 ein Verbindungselement 10 gemäß einer zweiten Ausführungsform beschrieben. Für gleichartige oder gleichwirkende Merkmale oder Komponenten werden die selben Bezugszeichen wie bei der ersten Ausführungsform verwendet. Zur Vermeidung von Wiederholungen werden im Folgenden die Unterschiede zwischen den beiden Ausführungsformen im Detail beschrieben. Komponenten und Merkmale, die bereits bezüglich der ersten Ausführungsform beschrieben wurden, werden nicht erneut detailliert beschrieben. Die Beschreibung dieser Komponenten und Merkmale gilt analog auch für die zweite Ausführungsform.

Die Figuren 11 und 12 zeigen perspektivische Ansichten eines Verbindungselements 10 gemäß der zweiten Ausführungsform. Das Verbindungselement 10 gemäß der zweiten Ausführungsform weist einen ersten Verbindungsabschnitt 12, einen zweiten Verbindungsabschnitt 14 und einen Anlageabschnitts 66 auf. Der Anlageabschnitts 66 ist zwischen dem ersten Verbindungsabschnitt 12 und dem zweiten Verbindungsabschnitt 14 angeordnet. Der erste Verbindungsabschnitt 12 und der zweite Verbindungsabschnitt 14 sind im Wesentlichen identisch ausgebildet, wobei der zweite Verbindungsabschnitt 14 um 90° zu dem ersten Verbindungsabschnitt 12 versetzt an dem Anlageabschnitts 66 angeordnet ist. Die Ausführungen bezüglich des ersten Verbindungsabschnitts 12 gemäß der ersten Ausführungsform gelten somit analog für beide Verbindungsabschnitte 12 und 14 gemäß der zweiten Ausführungsform.

Der erste Verbindungsabschnitt 12 weist einen Kopfabschnitt 16 und einen säulenförmigen Abschnitt 18 auf, der den ersten Verbindungsabschnitt 12 mit dem Anlageabschnitts 66 verbindet. An dem Kopfabschnitt 16 sind ersten Klemmflächen 20 und 22 ausgebildet, die einer Klemmfläche 68 an dem Anlageabschnitt 66 zugewandt sind. Die Klemmflächen 20 und 22 weisen eine vorbestimmte Klemmkontur KK₁ und KK₂.

Der zweite Verbindungsabschnitt weist einen Kopfabschnitt 70 und einen säulenförmigen Abschnitt 72 auf, der den zweiten Verbindungsabschnitt 14 mit dem Anlageabschnitt 66 verbindet. An dem Kopfabschnitt 70 sind Klemmflächen 24 und 74 ausgebildet, die einer Klemmfläche 76 an dem Anlageabschnitt 66 zugewandt sind. Die Klemmflächen 24 und 74 sind um 90° zu den Klemmflächen 20 und 22 des ersten Verbindungsabschnitts 12 versetzt. An der Oberseite des Kopfabschnitts 70 des zweiten Verbindungsabschnitts ist ein Schlitz 78 erkennbar, der die Oberseite bzw. den oberen Abschnitt des Verbindungselements 10 kennzeichnet.

Der Anlageabschnitts 66 ist gemäß dieser Ausführungsform plattenförmig ausgebildet und weist eine quadratische Grundform auf. Die Seitenflächen 80 des Anlageabschnitts 66 bilden Ansatzflächen zum Ansetzen eines Werkzeugs zur Montage des Verbindungselements 10. Die Ansatzflächen 80 können sogenannte Schlüsselflächen sein, an denen ein einem Schraubenschlüssel ähnliches Werkzeug angesetzt werden kann.

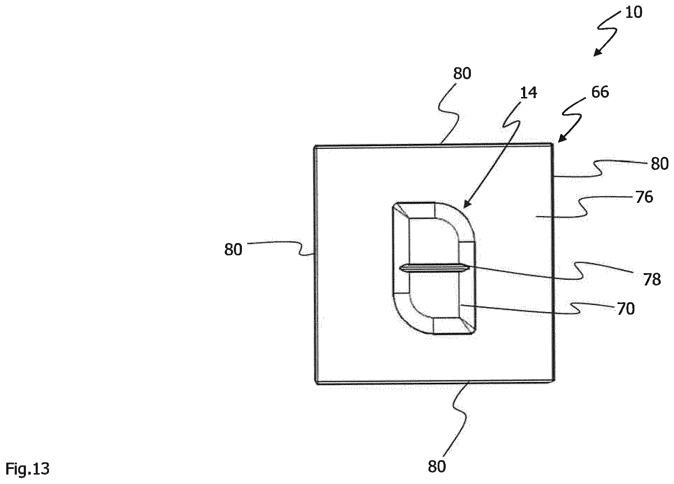

Figur 13 zeigt eine Draufsicht auf das Verbindungselement 10. In Figur 13 sind der zweite Verbindungsabschnitt 14 und der Anlageabschnitt 66 gezeigt. Der Anlageabschnitt 66 ist quadratisch und plattenförmig ausgebildet. An dem Anlageabschnitt 66 sind vier Ansatzflächen 80 ausgebildet, an denen ein Werkzeug zum Verdrehen des Verbindungselements 10 angesetzt werden kann. An der Oberseite des zweiten Verbindungsabschnitts 14 ist der Schlitz 78 gezeigt, der die Oberseite bzw. den oberen Abschnitt des Verbindungselements 10 kennzeichnet.

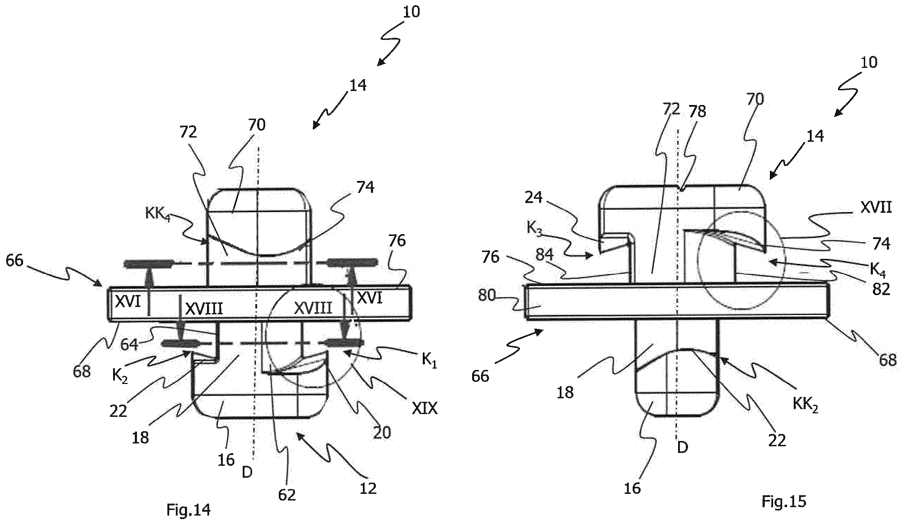

Die Figuren 14 und 15 zeigen Ansichten des Verbindungselements 10 aus verschiedenen Blickrichtungen. Aus Gründen der Übersichtlichkeit sind nicht in beiden Figuren sämtliche Merkmale mit Bezugszeichen versehen worden. Im Zusammenhang mit dem ersten Verbindungsabschnitt 12 wird zur Vermeidung von Wiederholungen auch auf die detaillierte Beschreibung des ersten Verbindungsabschnitts 12 im Zusammenhang mit der voranstehend beschriebenen ersten Ausführungsform verwiesen.

Der erste Verbindungsabschnitt 12 weist einen Kopfabschnitt 16 und einen säulenförmigen Abschnitt 18 auf, der den ersten Verbindungsabschnitt 12 mit dem Anlageabschnitt 66 verbindet. Der erste Verbindungsabschnitt 12 weist an seinem Kopfabschnitt 16 zwei Klemmflächen 20 und 22 auf, die eine vorbestimmte Klemmkontur KK₁ und KK₂ (siehe Figuren 4 und 14) haben. Die Klemmflächen 20 und 22 sind einer Klemmfläche 68 an dem Anlageabschnitts 66 zugewandt. Die Klemmfläche 68 erstreckt sich im Wesentlichen senkrecht zur Drehachse D. Die Klemmflächen 20 und 22 legen zusammen mit der Klemmfläche 68 zwei Klemmkanäle K₁ und K₂ fest, die dem ersten Verbindungsabschnitt 12 zugeordnet sind. Die Klemmkanäle K₁ und K₂ werden ferner durch die Wandabschnitte 62 und 64 an dem Abschnitt 18 begrenzt, die die Klemmkanäle K₁ und K₂ in einer Richtung quer zur Drehachse D begrenzen.

Der zweite Verbindungsabschnitt 14 weist einen Kopfabschnitt 70 und einen säulenförmigen Abschnitt 72 auf. Der säulenförmigen Abschnitt 42 verbindet den Kopfabschnitt 70 mit dem Anlageabschnitt 66. An dem Kopfabschnitt 70 sind zwei Klemmflächen 24 und 74 ausgebildet. Die Klemmflächen 74 und 24 haben vorbestimmte Klemmkonturen KK₃ und KK₄ (siehe Figuren 11 und 12). Die Klemmflächen 24 und 74 sind der Klemmfläche 76 an dem Anlageabschnitt 66 zugewandt. Die Klemmfläche 76 verläuft im Wesentlichen senkrecht zur Drehachse D. Die Klemmflächen 24 und 74 legen zusammen mit der Klemmfläche 76 an dem Anlageabschnitt 66 zwei Klemmkanäle K₃ und K₄ fest. Die Klemmkanäle K₃ und K₄ werden ferner durch die Wandabschnitte 82 und 84 an den Abschnitt 72 begrenzt, die die Klemmkanäle K₃ und K₄ in einer Richtung quer zur Drehachse D begrenzen.

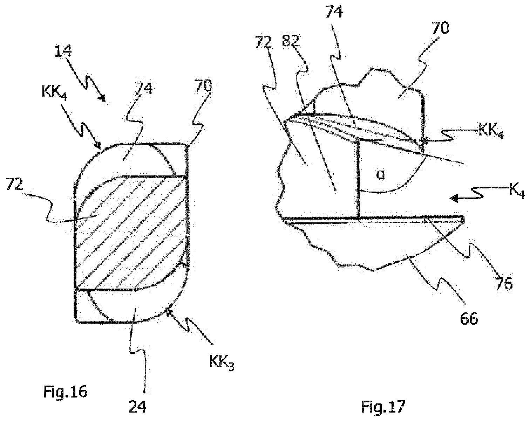

Figur 16 zeigt eine Schnittansicht entlang der Schnittlinie XVI-XVI in Figur 14. In Figur 16 ist der Kopfabschnitt 70 und der säulenförmigen Abschnitt 72 gezeigt. An dem Kopfabschnitt 70 sind die Klemmflächen 24 und 74 ausgebildet. Die Klemmflächen 24 und 74 weisen jeweils eine vorbestimmte Klemmkontur KK₃ und KK₄ auf. Die Klemmflächen 24 und 74 erstrecken sich ausgehend von den seitlichen Wandflächen 82 und 84 des Abschnitts 72 abgewinkelt zu diesen Wandflächen 82 und 84. Die Wandflächen 82 und 84 erstrecken sich zwischen den Seitenflächen 86 und 88 des ersten Verbindungsabschnitts 14. Die Wandflächen 82 und 84 haben einen geraden Abschnitt und einen gekrümmten Abschnitt. Ausgehend von einer der Seitenflächen 86 und 88 erstrecken sich die Wandflächen 82 und 84 mit ihrem geraden Abschnitt zunächst im Wesentlichen rechtwinklig zu einer dieser Seitenfläche 86 und 88. Mit dem gekrümmten Abschnitt gehen die Wandflächen 82 und 84 dann in die jeweils andere Seitenfläche 86 und 88 des ersten Verbindungsabschnitts 14 über.

Figur 17 zeigt eine vergrößerte Ansicht des Details XVII in Figur 15. Die Klemmflächen 74 und 76 legen zusammen mit der Wandfläche 82 des Abschnitts 72 den Klemmkanal K₄ fest. Die Klemmfläche 74 weist eine vorbestimmte Klemmkontur KK₄ auf, die mit einer Hinterschneidung versehen ist. Die Hinterschneidung wird durch einen Winkel α zwischen der Klemmfläche 74 und der Wandfläche 82 gebildet, die sich parallel zur Drehachse D erstreckt (siehe Figur 15). Der Winkel α kann zwischen 45° und 85° betragen. Beispielsweise kann der Winkel α 75° betragen.

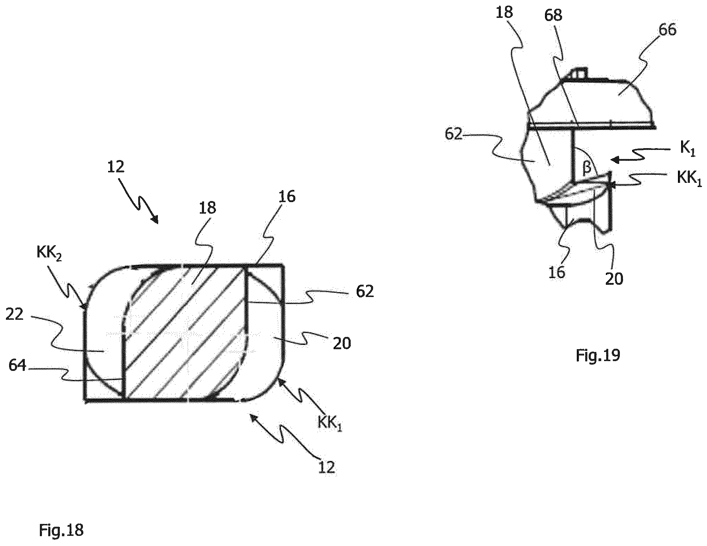

Figur 18 zeigt eine Schnittansicht entlang der Schnittlinie XVIII-XVIII in Figur 14. In Figur 18 ist der erste Verbindungsabschnitt 12 gezeigt. An dem Kopfabschnitt 16 des ersten Verbindungsabschnitts 12 sind die Klemmflächen 20 und 22 ausgebildet. Die Klemmflächen 20 und 22 haben jeweils eine vorbestimmte Klemmkontur KK₁ und KK₂. Die Klemmflächen 20 und 22 erstrecken sich ausgehend von den seitlichen Wandflächen 62 und 64 des Abschnitts 18, d.h. die Klemmflächen 20 und 22 umgeben den säulenförmigen Abschnitt 18 nicht vollständig. Die Wandflächen 62 und 64 erstrecken sich zwischen den Seitenflächen 52 und 54 des ersten Verbindungsabschnitts 12 abgewinkelt zu diesen Wandflächen 50 und 52. Die Wandflächen 62 und 64 haben einen geraden Abschnitt und einen gekrümmten Abschnitt. Ausgehend von einer der Seitenflächen 50, 52 erstrecken sich die Wandflächen 62 und 64 mit ihrem geraden Abschnitt zunächst im Wesentlichen rechtwinklig zu dieser Seitenfläche 50 und 52. Mit dem gekrümmten Abschnitt gehen die Wandflächen 62 und 64 dann in die jeweils andere Seitenfläche 50 und 52 des ersten Verbindungsabschnitts 12 über.

Figur 19 zeigt eine vergrößerte Ansicht des Details XIX in Figur 14. Die Klemmflächen 20 und 68 legen zusammen mit dem Wandabschnitte 62 einen Klemmkanal K₁ fest. Der Klemmkanal K1 verändert seinen Querschnitt in einer Richtung, um die Drehachse D. Insbesondere verringert sich der Querschnitt des Klemmkanals K₁ je weiter sich die Klemmfläche 20 weg von der Drehachse D (siehe Figur 14) erstreckt. Die Klemmkontur KK₁ der Klemmfläche 20 weist eine Hinterschneidung auf. Die Hinterschneidung wird durch einen Winkel β zwischen der Klemmfläche 20 und der Wandfläche 62 gebildet, die sich parallel zur Drehachse D erstreckt (siehe Figur 15). Der Winkel β kann zwischen 45° und 85° betragen. Beispielsweise kann der Winkel β 77° betragen.

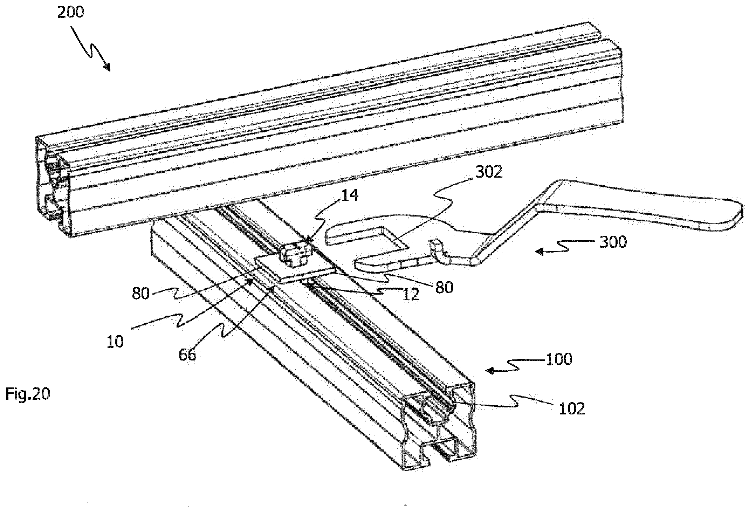

Figur 20 zeigt eine perspektivische Ansicht des Verbindungselements 10 gemäß der zweiten Ausführungsform im in einem Profilelement 100 eingesetzten Zustand. Über das Verbindungselement 10 sollen die beiden Profilelemente 100, 200 verbunden werden. Dazu ist das Verbindungselement 10 mit seinem ersten Verbindungsabschnitt 12 (siehe Figuren 14 und 15) in die Aufnahme 102 des Profilelements 100 eingesetzt worden. Um die beiden Profilelemente 100 und 200 miteinander verbinden zu können, muss das Verbindungselement 10 relativ zu den beiden Profilelemente 100, 200 verdreht werden. Die Verdrehung erfolgt über den in Figur 20 dargestellten Schlüssel 300. Der Schlüssel 300 weist eine Schlüsselaufnahme 302 auf, in der der plattenförmige Anlageabschnitt 66 aufgenommen werden kann. Der Schlüssel kann mit seiner Schlüsselaufnahme 302 an den seitlichen Ansatzflächen 80 des Anlageabschnitts 66 (nicht gezeigt) angesetzt werden. Das Verbindungselement 10 liegt mit seinem Anlageabschnitt 66 an dem Profilelement 100 an und der Verbindungsabschnitt 12 ist in der Aufnahme 102 aufgenommen. Das Verbindungselement 10 ist zwar mit seinem ersten Verbindungsabschnitt 12 in der Aufnahme 102 aufgenommen, jedoch noch nicht mit dem Profilelement 100 verklemmt. Dazu muss das Verbindungselement 10 relativ zu den beiden Profilelemente 100, 200 verdreht werden, nachdem das Profilelement 200 auf den zweiten Verbindungsabschnitt 14 des Verbindungselements 10 aufgesetzt wurde.

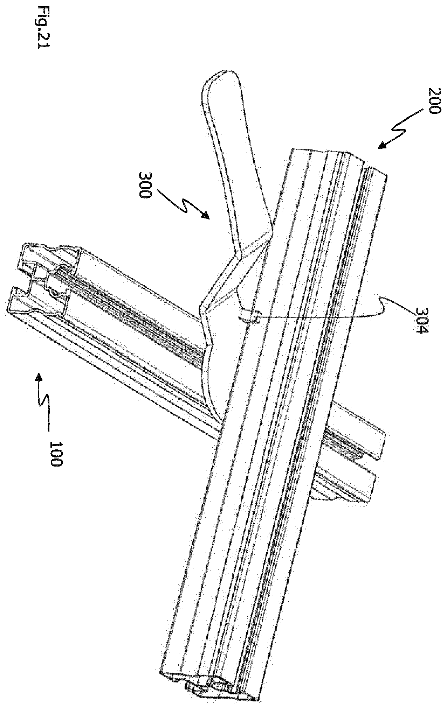

In Figur 21 wurden die Profilelemente 100, 200 über das Verbindungselement 10 verbunden. Dazu wurde das Verbindungselement 10 (siehe Figur, 20) mit dem Schlüssel 300 relativ zu dem Profilelemente 100, 200 um 90° verdreht. Dass die Verdrehung in Figur 21 bereits erfolgt, wird dadurch deutlich, dass der Schlüssel 300 mit seinem Anschlag 304 an dem Profilelement 200 anliegt. Durch die Anlage des Anschlags 304 an dem Profilelement 200 wird verdeutlicht, dass der zur Verbindung der beiden Profilelemente 100, 200 notwendige Betrag der Verdrehung des Verbindungselements 10 ausgeführt wurde.

Der Anlageabschnitt 66 weist eine vorbestimmte Dicke in Richtung der Drehachse D (siehe Figuren 14 und 15) auf. Die Dicke des Anlageabschnitts 66 ermöglicht ein Ansetzen und Entnehmen des Schlüssels 300 aus dem Bereich zwischen den beiden Profilelementen 100, 200 selbst dann, wenn die beiden Profilelemente 100, 200 miteinander verbunden sind, wie in Figur 21 dargestellt ist. Die Dicke des Schlüssels 300 ist dementsprechend auf die Dicke des Anlageabschnitts 66 abgestimmt. Die Dicke des Schlüssels 300 kann gleich groß oder geringfügig kleiner als die Dicke des Anlageabschnitts 66 sein.

## Patentansprüche

1. Verbindungselement (10) zum Verbinden von wenigstens zwei Profilelementen (100, 200), wobei das Verbindungselement (10) zur Erzeugung einer Klemmkraft um eine Drehachse (D) verdrehbar ist,
wobei das Verbindungselement (10) wenigstens einen ersten Verbindungsabschnitt (12) und wenigstens einen zweiten Verbindungsabschnitt (14) aufweist, die jeweils zur Aufnahme in einem der Profilelemente (100, 200) ausgebildet sind,
wobei der erste Verbindungsabschnitt (12) wenigstens eine erste Klemmfläche (20, 22) aufweist, wobei die wenigstens eine erste Klemmfläche (20, 22) mit einer vorbestimmten Klemmkontur (KK₁) ausgebildet ist,
wobei der zweite Verbindungsabschnitt (14) wenigstens eine zweite Klemmfläche (24, 74) aufweist, wobei die erste Klemmfläche (20, 22) dem zweiten Verbindungsabschnitt (14) und die zweite Klemmfläche (24, 74) dem ersten Verbindungsabschnitt (12) zugewandt sind,
wobei der erste Verbindungsabschnitt (12) und der zweite Verbindungsabschnitt (14) derart ausgebildet sind, dass die über das Verbindungselement (10) verbundenen Profilelemente (100, 200) schräg zueinander oder über Kreuz verlaufen, wobei der zweite Verbindungsabschnitt (14) derart ausgebildet ist, dass der zweite Verbindungsabschnitt (14) in einer Aufnahme (102) in einem der beiden Profilelemente (100) über eine Presspassung aufnehmbar ist, **dadurch gekennzeichnet, dass** der zweite Verbindungsabschnitt (14) derart ausgebildet ist, dass der zweite Verbindungsabschnitt (14) ausgehend von einer Stirnseite (106, 108) eines der Profilelemente (100, 200) in die Aufnahme (102) des Profilelements (100, 200) einpressbar ist, und wobei das Verbindungselement (10) über den zweiten Verbindungsabschnitt (14) in eine vordefinierte Position an dem Profilelement (100, 200) verlagert wird.

2. Verbindungselement (10) nach Anspruch 1,
wobei an dem zweiten Verbindungsabschnitt (14) wenigstens ein Vorsprung (34, 36, 44) zum Abstützen an einer Aufnahme (102) eines der Profilelemente (100) ausgebildet ist.

3. Verbindungselement (10) nach einem der vorangehenden Ansprüche, wobei die wenigstens eine erste Klemmfläche (20, 22) und die wenigstens eine zweite Klemmfläche (24) zwischen sich wenigstens einen Klemmkanal (K₁, K₂) zum Klemmen eines Abschnitts eines der Profilelemente (100, 200) bilden.

4. Verbindungselement (10) nach einem der vorangehenden Ansprüche, wobei der zweite Verbindungsabschnitt (14) wenigstens eine Abstützfläche (26, 28) aufweist, die zum Abstützen des zweiten Verbindungsabschnitts (14) an der Aufnahme (102) von einem der Profilelemente (100, 200) ausgebildet ist.

5. Verbindungselement (10) nach einem der vorangehenden Ansprüche, wobei die zweite Klemmfläche (24, 74) des zweiten Verbindungsabschnitts (14) mit einer vorbestimmten Klemmkontur (KK₂) ausgebildet ist.

6. Verbindungselement (10) nach einem der vorangehenden Ansprüche, wobei die Klemmkontur (KK₁) der wenigstens einen ersten Klemmfläche (20, 22) des ersten Verbindungsabschnitts (12) und/oder die Klemmkontur (KK₂) der wenigstens einen zweiten Klemmfläche des zweiten Verbindungsabschnitts (14) eine Krümmung und/oder eine Hinterschneidung aufweisen.

7. Baugruppe (BG) mit wenigstens einem Profilelement (100) und wenigstens einem Verbindungselement (10) nach einem der Ansprüche 1 bis 4, wobei das wenigstens eine Verbindungselement (10) mit seinem zweiten Verbindungsabschnitt (14) in der Aufnahme (102) des wenigstens einen Profilelements (100) über eine Presspassung aufgenommen ist.

## Claims

1. A connecting element (10) for connecting at least two profile elements (100, 200), the connecting element (10) being rotatable about an axis of rotation (D) to generate a clamping force,
the connecting element (10) comprising at least one first connecting portion (12) and at least one second connecting portion (14), each configured to be received in one of the profile elements (100, 200),
the first connecting portion (12) comprising at least one first clamping surface (20, 22), the at least one first clamping surface (20, 22) being formed with a predetermined clamping contour (KK,),
the second connecting portion (14) comprising at least one second clamping surface (24, 74), the first clamping surface (20, 22) facing the second connecting portion (14) and the second clamping surface (24, 74) facing the first connecting portion (12),
the first connecting portion (12) and the second connecting portion (14) being configured such that the profile elements (100, 200) connected via the connecting element (10) are at an angle relative to each other or crosswise, the second connecting portion (14) being configured such that the second connecting portion (14) can be received in a receptacle (102) in one of the two profile elements (100) via an interference fit, **characterized in that** the second connecting portion (14) is configured such that the second connecting portion (14) can be pressed into the receptacle (102) of the profile element (100, 200) starting from a front side (106, 108) of one of the profile elements (100, 200), and the connecting element (10) being displaced into a predefined position on the profile element (100, 200) via the second connecting portion (14).

2. The connecting element (10) of claim 1,
at least one projection (34, 36, 44) being formed on the second connecting portion (14) for support on a receptacle (102) of one of the profile elements (100).

3. The connecting element (10) of any one of the preceding claims,
the at least one first clamping surface (20, 22) and the at least one second clamping surface (24) forming at least one clamping channel (K₁, K₂) therebetween for clamping a portion of one of the profile elements (100, 200).

4. The connecting element (10) of any one of the preceding claims,
the second connecting portion (14) including at least one support surface (26, 28) configured to support the second connecting portion (14) on the receptacle (102) of one of the profile elements (100, 200).

5. The connecting element (10) of any one of the preceding claims,
the second clamping surface (24, 74) of the second connecting portion (14) being formed with a predetermined clamping contour (KK₂).

6. The connecting element (10) of any one of the preceding claims,
the clamping contour (KK₁) of the at least one first clamping surface (20, 22) of the first connecting portion (12) and/or the clamping contour (KK₂) of the at least one second clamping surface of the second connecting portion (14) having a curvature and/or an undercut.

7. An assembly (BG) comprising at least one profile element (100) and at least one connecting element (10) of any one of claims 1 to 4, the at least one connecting element (10) being received with its second connecting portion (14) in the receptacle (102) of the at least one profile element (100) via an interference fit.

## Revendications

1. Élément de liaison (10) pour relier au moins deux éléments profilés (100, 200), l'élément de liaison (10) pouvant tourner autour d'un axe de rotation (D) afin de générer une force de serrage,
dans lequel l'élément de liaison (10) comprend au moins une première partie de liaison (12) et au moins une deuxième partie de liaison (14) qui sont chacune conçues pour être logées dans l'un des éléments profilés (100, 200),
dans lequel la première partie de liaison (12) comprend au moins une première surface de serrage (20, 22), ladite au moins une première surface de serrage (20, 22) étant conçue avec un contour de serrage prédéfini (KK₁),
dans lequel la deuxième partie de liaison (14) comprend au moins une deuxième surface de serrage (24, 74), la première surface de serrage (20, 22) étant tournée vers la deuxième partie de liaison (14) et la deuxième surface de serrage (24, 74) étant tournée vers la première partie de liaison (12),
dans lequel la première partie de liaison (12) et la deuxième partie de liaison (14) sont conçues de telle sorte que les éléments profilés (100, 200) reliés par l'élément de liaison (10) s'étendent obliquement l'un par rapport à l'autre ou en croix, dans lequel la deuxième partie de liaison (14) est conçue de telle sorte que la deuxième partie de liaison (14) peut être logée dans un logement (102) dans l'un des deux éléments profilés (100) au moyen d'un ajustement serré,
**caractérisé en ce que**
la deuxième partie de liaison (14) est conçue de telle sorte que la deuxième partie de liaison (14) peut être enfoncée dans le logement (102) de l'élément profilé (100, 200) à partir d'une face frontale (106, 108) de l'un des éléments profilés (100, 200), et **en ce que** l'élément de liaison (10) est déplacé dans une position prédéfinie sur l'élément profilé (100, 200) par la deuxième partie de liaison (14).

2. Élément de liaison (10) selon la revendication 1,
dans lequel au moins une saillie (34, 36, 44) est formée sur la deuxième partie de liaison (14) pour s'appuyer sur un logement (102) de l'un des éléments profilés (100).

3. Élément de liaison (10) selon l'une quelconque des revendications précédentes,
dans lequel ladite au moins une première surface de serrage (20, 22) et ladite au moins une deuxième surface de serrage (24) forment entre elles au moins un canal de serrage (K₁, K₂) pour serrer une partie de l'un des éléments profilés (100, 200).

4. Élément de liaison (10) selon l'une quelconque des revendications précédentes,
dans lequel la deuxième partie de liaison (14) comprend au moins une surface d'appui (26, 28) qui est conçue pour appuyer la deuxième partie de liaison (14) sur le logement (102) de l'un des éléments profilés (100, 200).

5. Élément de liaison (10) selon l'une quelconque des revendications précédentes,
dans lequel la deuxième surface de serrage (24, 74) de la deuxième partie de liaison (14) est conçue avec un contour de serrage prédéfini (KK₂).

6. Élément de liaison (10) selon l'une quelconque des revendications précédentes,
dans lequel le contour de serrage (KK₁) de ladite au moins une première surface de serrage (20, 22) de la première partie de liaison (12) et/ou le contour de serrage (KK₂) de ladite au moins une deuxième surface de serrage de la deuxième partie de liaison (14) comprennent une courbure et/ou une contre-dépouille.

7. Ensemble (BG) comprenant au moins un élément profilé (100) et au moins un élément de liaison (10) selon l'une quelconque des revendications 1 à 4, dans lequel ledit au moins un élément de liaison (10) est logé avec sa deuxième partie de liaison (14) dans le logement (102) dudit au moins un élément profilé (100) au moyen d'un ajustement serré.
